# EUROPEAN PATENT SPECIFICATION

(11) **EP 1 188 299 B1**
(45) Date of publication and mention of the grant of the patent: **12.08.2009**
(21) Application number: 00939255.6
(22) Date of filing: 07.06.2000
(51) Int. Cl.: H04M 3/42

(54) **CONTROL OF PRIVATE BRANCH EXCHANGE VIA CTI-LINK FROM NETWORK BASED VOICE CONTROL SERVICES**
FERNSPRECHSTEUERUNG EINER NEBENSTELLENANLAGE DURCH CTI-VERBINDUNG DURCH AUF EIN NETZWERK BASIERTE SPRACHSTEUERDIENSTE
CONTROLE D'UN AUTOCOMMUTATEUR PRIVE VIA UNE LIAISON ITO (INTEGRATION TELEPHONIQUE PAR ORDINATEUR) DEPUIS LES SERVICES DE COMMANDE VOCALE DU RESEAU

(30) Priority: 07.06.1999 SE 9902160
(43) Date of publication of application: 20.03.2002
(73) Proprietor: TELIASONERA AB, 106 63 Stockholm (SE)
(72) Inventor: MIRZA, Rehan, S-753 21 Uppsala (SE)
(74) Representative: Hopfgarten, Nils
(86) International application number: PCT/SE2000/001182
(87) International publication number: WO 2000/076191

(56) References cited:
- WO-A1-99/51012
- WO-A2-97/10667
- US-A- 5 353 336

## Description

### Technical field

Telecommunications system adapted to provide a service which makes it possible for a user of a Private Branch Exchange (PBX) to be connected to a destination by pronouncing its name, wherein the destination can be an internal extension or be in a Public Switched Telecommunication Network, PSTN, and wherein a CTI-server (CTI-server 1, CTI-server 2) is provided to control the PBX and set up a call between the user (A) and wanted extension, said PBX being arranged to perform the call control, and speech recognition resources and database for names being arranged for co-utilisation by said PBX and possible other exchanges of the system.

### Prior art

Voice controlled call control is today normally of two types: Located at the customers, with consequences for operation and maintenance, which is rather cumbersome in a bigger company if there often is a need to add new names (recording of names, installation of phonetic description of pronunciation of names), or located in network, which results in high call costs due to "tromboning" over the Public Switched Telecommunication Network.

US 5 353 336 describes a voiced directed communication system which makes it possible for a user of the service to be connected to a person or a function by pronouncing a voice-identified calling label. The voice recognition resources and database for names are centrally located and the call control is made locally.

### Technical problem

The problem primarily concerns services similar to Telia DigitTala, which is a voice-controlled auto-attendant, which makes it possible to call a person, or function, in a company by pronouncing the name. The call can be initiated from internal extension under the exchange, from other exchange, or from the Public Switched Telecommunication Network.

In all telephone services located in the network where one needs to forward a calling party A to a third party C (for instance calling by voice), the problem will arise that two speech channels will be set up during the whole call between A and C, so called tromboning. If the service is integrated with a PBX, an internal call between two extensions under the exchange will occupy two speech channels on an external trunk during the whole call. This will be expensive as far as telephone charges are concerned, but will also produce a high load on the exchange and will probably result in that it will be necessary to add an extra trunk card to the exchange.

In the telephone protocols that are used today by PBXs towards the Public Switched Telecommunication Network (above all P7/P8 and ISDN), there is no possibility to instruct the exchange to transfer calls. Protocols that support this (for instance different variants of CAS and analog protocols) require locally placed equipment, or leased lines.

### Technical solution

The technical solution according for the invention is defined in claim 1.

### Advantages

By the present invention, the control of the communication between the parties in a communication network is improved. Further, one has possibility to make the call control locally in the exchange (low telecommunication charges), but locate the speech recognition resources and the database for names centrally (co-utilisation of expensive speech recognition licenses; the customer need not himself/herself perform maintenance and updating).

### List of figures

Figure 1 shows CTI-server integrated in Telia Digitala.
Figure 2 shows the logical blocks and the interfaces between them.
Figure'3: Supervision of virtual telephones by link.

### Detailed description

To facilitate the understanding of the invention, here is presented a list over definitions that are specific to the invention.
- A-number: Calling Line ID. Telephone number of the extension from which one has called DigiTala.
- B-number: Called Line ID. Telephone number in the Public Switched Telecommunication Network to DigiTala. Each customer has a pool of unique B-numbers.
- C-number: Telephone number to wanted party, i.e. the number the application transmits to the CTI-server.
- PBX-number: The A-number of the PBX.
- Dialled number: The telephone number the user has "dialled" to reach DigiTala. If the user has "dialled" a group number, is meant the number that has been selected by the exchange.

A common technology in connection with CallCenter is to use a so-called Link, which is a computer interface towards the exchange, via which surveillance and control of extensions and functions can be made. The link is software and a card in the exchange, or software on a PC connected to the exchange. Communication between service logic (centrally located) and Link is made via TCP/IP over a connection with low demands on bandwidth. The speech channels to the service are passing via the Public Switched Telecommunication Network.

Via the Link-interface, the centrally located service logic can control incoming calls to the voice controlled service over a free channel on an outgoing route. After executed dialog, the voice control application transmits the telephone number to which A shall be connected over the CTI-interface to the Link that reroutes the call internally within the exchange. The external speech channel then can be immediately disconnected.

Since the service handles a plurality of exchanges at different customers, and each customer/exchange can use a plurality of speech channels at the same time, a method is needed to associate speech channel with the information over the CTI-interface. For this purpose each customer/exchange is allocated a series of B-numbers that are used to call the service. The number of numbers = the number of possible calls at the same time. When a call shall be set up to the service, the CTI-application selects a free B-number from the customer's series. The speech recognition application detects the number when the call is coming in and uses this a's identifier at communication over the CTI-interface.

In the following is shown an example of the invention implemented in a system architecture.

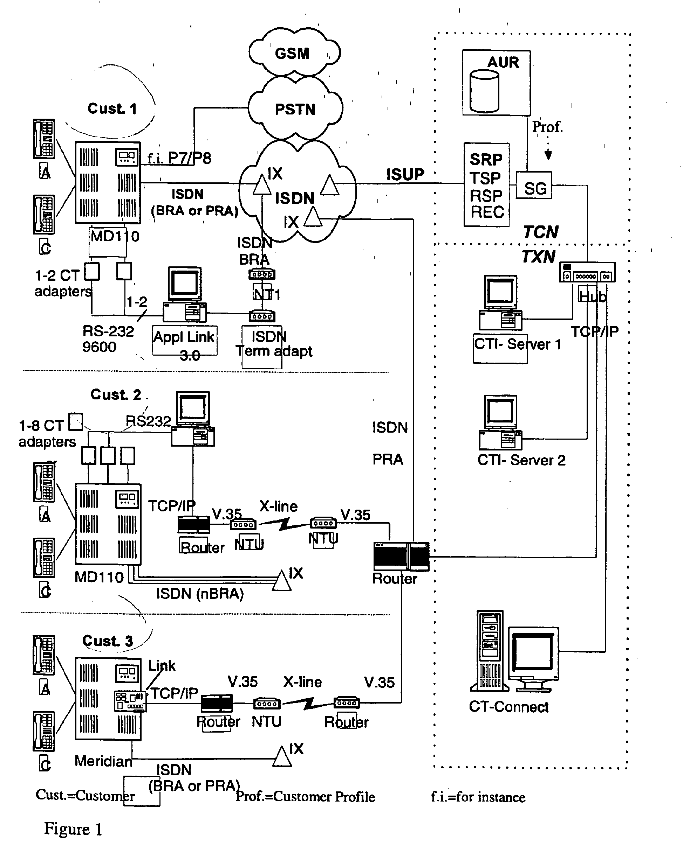

Figure 1 shows how the CTI-server is integrated in the service TeliaDigitala, with three different types of customers connected.

Figure 1 shows only example of how the CTI-function is integrated with the customer's exchange. Solution is decided from case to case. Customer 1 has a smaller MD110- exchange, so it has been assessed as sufficient with 2 CT-adapters. In the example, moreover, TCP/IP over called circuit ISDN has been selected as access form for communication between CT-Connect and Application Link.

Customer 2 has a larger MD110, at which has been assessed that more than 2 CT-adapters are needed. To Application Link can be connected maximally 8 CT-adapters. In order to distribute the load, DigiTala is connected to a plurality of different LIMs; for instance 4 outgoing ISDN-channels spread on 1-8 LIM. To each LIM with outgoing telephone channels to DigiTala is also connected a CT-adapter. Here Telia Link X-line is used as access form for communication between Application Link and CT-Connect.

Customer 3 has a Meridian exchange. Meridian Link consists of a card mounted in the exchange and software, so no locally placed PC is needed.

Only the machine that runs CT-Connect communicat'es with external router. CTI-servers communicate with CT-Connect and with SRP and AUR via the System Interface.
It is of course also possible to have one CT-connect per CTI-server, or to use the same machine for CTI-server (the control program) as for CT-Connect.

### In the following the components of the CTI-server are described

### Logical division and interface

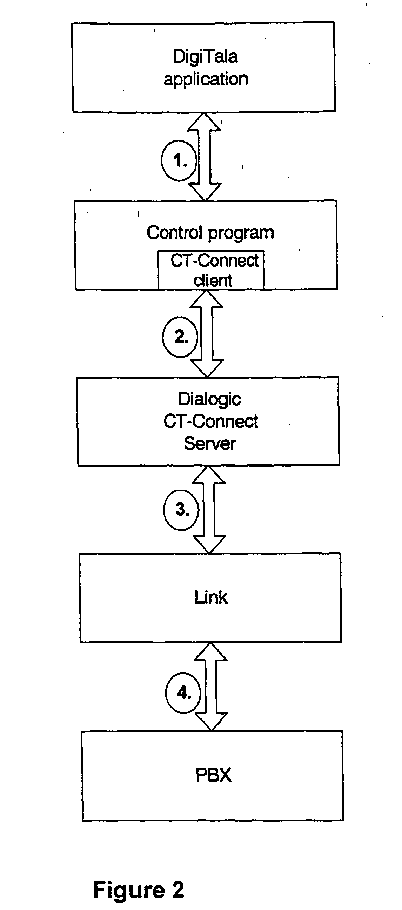

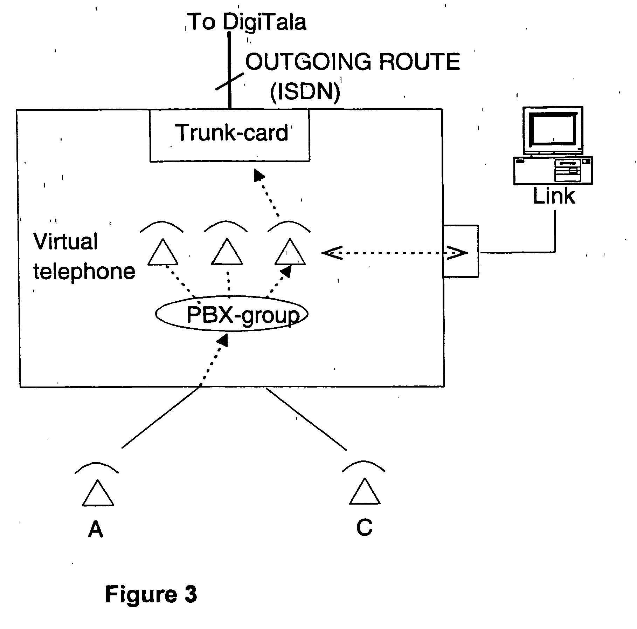

Figure 2 shows the logical blocks and the interfaces between them. DigiTala communicates with the control program of the CTI-Server via the System Interface of SRP (1). The control program executes as a service under Windows NT and does not communicate directly with the link, but via a middleware (CT-Connect) (2), which hides the greater part of the supplier specific qualities in the interface towards different exchanges. This consists of a client part and a server part that can be applied to different machines, if wanted.
Communication between middleware and link (Application Link resp. Meridian Link) is made by CSTA over TCP/IP (3).
The communication between link and exchange is a supplier specific, not open (proprietary) protocol (4). For MD110 the connection is made to PBX via one or more CT-adapters.

### Hardware and software

### Centrally located resources

Both CTI-server (control program) and CT-Connect-Server are built at fault tolerant machines with high accessibility. For CTI-Server is selected reliable NT-servers. Suitably 350 MHz or more, and at least 256 Mb main memory. Hard disk memory is not critical. 2 Gb is sufficent.
For CT-Connect there are the alternatives Windows NT or Sun Solaris. Also here there are very high demands on accessibility. To an NT-server similar recommendations as above apply.

### Equipment per customer

Because of the distribute architecture of MD110, the dimensioning of hardware and extensions depends on the size of the exchange and expected frequency of calls to DigiTala. A recommendation is, not to have more than 4 telephone operators per LIM, i.e. max. 4 outgoing lines to DigiTala. To a free LIM, without other extensions, one can connect 10 lines. In addition to call frequency, for instance number of LIMs, load on LIM and group connection lines, as well as geographical location of LIMs, are factors that can influence dimensioning of hardware and location of extensions.

In Table 1 below, four different types of customers with low, medium, high and very high call frequency are shown. The number of calls is calculated on an average length of call of 18 seconds. The number of lines is rounded upwards to a multiple of two.

In Table 2 are shown which equipment and how many extensions that are needed for the different types of customers. It should be noticed that these only are guiding values. Before each installation an analysis is made of the customer's exchange environment. The result of this constitutes the base for the dimensioning.

### Minimum demand on PC for Application Link:

Pentium 133 MHz
64 Mb RAM
2 Gb hard disk
Network card 10 Mb Ethernet
2 free serial ports
CD-ROM
Windows NT Workstation 4.0 +
Service pack 4

Cables and connectors are to be added. The exchange also may need to be supplemented with trunk and extension cards. For larger exchanges, with 25 LIMs and upwards, it sometimes may be necessary to use more than one Application Link if it is estimated that the number of connection points and CT-adapters are not sufficient. Individual solutions probably have to be designed for larger exchanges for distribution of the load in best possible way.

### In the following the function is described

### Types of exchanges

The following types of exchanges and releases are supported by the CTI-Server:
1. Ericsson Consono MD 110 Release BC9, BC10
2. Nortel Meridian, Option 11C - Option 81C Release 21, 22, 23

The CTI-interface towards MD110 and Meridian differs i.a. by the link in the case MD110 (Application Link 3.0) being on a PC in connection to the exchange. The communication between link and exchange is made over V.24 via CT-adapters. Meridian Link consists of a card and belonging software that is installed in the exchange. Certain differences of program logic also exist, since the possibilities to control and supervise different types of extensions somewhat differ between different types of exchanges.

### Start of CTI-server

All programs that are needed for the CTI-server start automatically at the start of the computer. Either as a service in Windows NT, or from Autostart.

For each customer, certain customer specific information has to be installed in DigiTala. No such information, however, is statically installed in the CTI-server, but the customer data that are needed are derived automatically from the customer database at start-up of the control program. As key is used the function name that the CTI-server later registers in the system interface of SRP. Each CTI-server has an own, unique, function name.

### The following customer data are derived at start-up:

For each customer, allocated just this CTI-server:
- *Customer-ID*
   Unique identifier for each customer.
   Also used as logical identifier in CT-connect.
- *B-number list*
   List of *n* B-numbers, where *n* = the number of
   ISDN-channels from the exchange reserved for DigiTala.
- *IP-address* to CT-Connect
- *Port number* to CT-Connect
- *Type of exchange and release*
   [ MD110-BC9 | MD110-BC10 | Meridian-R21 |
   Meridian-R22 | Meridian-R23 ]

IP-address and port number to link must be configured locally in a file on the CT-Connect-server. Connection between logic identifier (customer-ID) and link address is made here.

### User calls DigiTala

In the exchange *n* extensions are reserved for DigiTala. These extensions need not have any physical telephones connected, but can be regarded as so called virtual telephones. It is, however, possible to control and supervise these from the link in the same way as real telephones. The number of virtual telephones reserved for DigiTala shall be less than, or equal to, the number of outgoing channels on ISDN-trunk to DigiTala.

When a user (external or internal) calls any of the extensions that have been configured for DigiTala, the CTI-server attends to that the call is forwarded on an outgoing ISDN-route by a B-number unique to the customer and the specific extension. The B-number is selected from the pool of numbers that was obtained at start-up of the CTI-server. The call is connected by parking A and making an enquiry to DigiTala on selected B-number.

Dimensioning of outgoing lines from PBX and incoming lines to SRP should be made so that the service, if there is a free, virtual telephone, always is reached. Should this not be the case, but one for some reason does not succeed in connecting the call to DigiTala, the call is disconnected without any specific message to A.

### Connection of users to Digitala

When a connection has been established towards DigiTala, we have a conference call between A, the virtual telephone and DigiTala. The application transmits a message to the CTI-server informing about that the call has been received. When the CTI-server has received all events from the link about the conference, a message is transmitted to DigiTala, which plays back the greeting prompt.
If the user selects to finish the call (for instance after an information request), or if the call is finished due to some fault, the application transmits a hang-up message to the CTI-server, which closes the conference.
If the user selects to be connected to C, the application transmits C's telephone number to the CTI-server.

### Transport of call

When the CTI-server has received the C-number, it first checks whether C is free. If the extension is busy, of if the call for some other reason cannot be set up, it transmits an error code to DigiTala.
If C is free, the CTI-server transmits a hang-up message, after which the application disconnects the connection between PBX and DigiTala. We now have a quite ordinary call between A and the virtual telephone. Via the link a transport of the call is made to extension C.

### Association of speech channel with information channel

Because several calls with DigiTala can be set up at the same time from an exchange (the same number as the number of virtual extensions reserved for DigiTala), a mechanism is required to logically connect a specific speech channel over the telecommunication network with corresponding information channel over TCP/IP.

Identification in the application of customer and speech channel is made by means of B-number, i.e. the number that the CTI-server orders the exchange to use to call DigiTala.

For each customer a pool of *n* B-numbers is defined. (*n* = the number of telephone channels to DigiTala). The CTI-server derives the list of B-numbers from DigiTala's customer database at start-up, with its own SG function name as key. Each B-number corresponds to a speech channel to DigiTala (= a virtual telephone) for a specific customer.

When a call reaches DigiTala, the application transmits the obtained B-number to the CTI-server, which, by means of this, can connect the call with right process in the control program.

Since the B-number is unique between all customers, customer-ID need not be included in messages. However, customer-ID is used for communication between control program and CT-Connect to appoint a specific exchange.

### Traffic cases

The solution shall correctly manage to handle traffic cases in the following combinations of access form, destination and call status:

Access form (from and to):
- Internal: Analog, digital, CAS, ISDN 2B+D, Telephone operator
- External: P7/P8, P8', ISDN (BRA and PRA)
- Above between exchanges in network group. (applies to homogenous networks; QSIG or DPNSS).

Destination:
- Internal as above
- PSTN
- ISDN
- GSM

External destination also can belong to other operator than Telia.

Call status:
1. Answer
2. No answer
3. Busy
4. Vacant extension
5. Temporary transfer (to all traffic cases 1-4)
6. Forwarding at no answer (to all traffic cases 1-4)

By correct handling is meant that the call is set up, or that error status is reported via tone-coded information from the exchange, or voice information from DigiTala.

The invention is not limited to the above given example but can also be used in other connections where one from voice controlled service, or voice information, need to perform control of call towards Private Branch Exchanges.

**Table 1: Type case MD110**

| **Customer** | **Calls/h** | **Erlang** | **Number of lines** | **Blocking probability** |
|---|---|---|---|---|
| A | 200 | 1 | 4 | 1.5 % |
| B | 600 | 3 | 8 | 0.8 % |
| C | 1000 | 5 | 10 | 1.8 % |
| D | 4000 | 20 | 30 | 0.8 % |

**Table 2 Component specification Meridian**

| **Equipment** | **Number** |
|---|---|
| Meridian Link HW | 1 |
| SW | I |
| Minirouter | 1 |
| X-Line 64kbps / V.35 | 1 |
| ISDN (DUO or MULTI) | 2 - 30 channels, depending on calculated frequency of calls |

**Table 3 Component specification Meridian**

| **Equipment** | **Number** |
|---|---|
| Meridian Link HW | 1 |
| Meridian Link SW | 1 |
| Minirouter | 1 |
| X-Line 64kbps / V.35 | 1 |
| ISDN (DUO or MULTI) | 2 - 30 channels, depending on calculated frequency of calls |

## Claims

1. Telecommunication system adapted to provide a service, which makes it possible for a user of a Private Branch Exchange, PBX, to be connected to a destination by pronouncing its name, wherein the destination can be an internal extension or be in a Public Switched Telecommunication Network, PSTN, and wherein a CTI-server (CTI-server 1, CTI-server 2) is provided to control the PBX and set up a call between the user (A) and wanted extension, said PBX being arranged to perform the call control, and speech recognition resources and database for names being arranged, centrally for co-utilisation by said PBX and possible other exchanges of the system, **characterized in that** a series of extensions of each PBX, B-numbers, is reserved for to call the service, each B-number being unique to a PBX and an extension reserved for the service, said CTI-server (CTI-server 1, CTI-server 2) being adapted to set up said call between user and an extension to said service by means of received B-number, without additional customer-ID.

2. Telecommunications system as claimed in Claim 1, **characterized in that** the number of B-numbers is equal to the number of simultaneously possible calls to said service.

3. Telecommunications system as claimed in Claim 1, **characterized in that** the CTI-server (CTI-server 1, CTI-server 2) is adapted to select a free B-number from the PBX's series of B-numbers, when a call shall be set up to a service.

4. Telecommunications system as claimed in Claim 1, **characterized in that** said speech recognition resources are adapted to detect the B-number when the call is received to use the B-number as identifier at communication over a CTI-interface.

## Patentansprüche

1. Telekommunikationssystem, das dazu ausgebildet ist, einen Dienst zur Verfügung zu stellen, der es für einen Benutzer einer privaten Nebenstellenanlage, PBX, ermöglicht, mit einem Ziel verbunden zu werden, indem er dessen Namen ausspricht, wobei das Ziel eine interne Nebenstelle oder in einem öffentlichen Telekommunikationsvermittlungsnetz, PSTN, sein kann, und wobei ein CTI-Server (CTI-Server 1, CTI-Server 2) vorgesehen ist, die PBX zu steuern und einen Ruf zwischen dem Benutzer (A) und der gewünschten Nebenstelle einzurichten, welche PBX dazu ausgebildet ist, die Rufsteuerung durchzuführen, und wobei Spracherkennungsressourcen und Datenbank für Namen zentral für Mitbenutzung durch die PBX und mögliche andere Nebenstellenanlagen des Systems angeordnet sind, **dadurch gekennzeichnet, dass** eine Serie von Nebenstellen jeder PBX, B-Nummern, zum Anrufen des Dienstes reserviert ist, wobei jede B-Nummer eindeutig für eine PBX und eine Nebenstelle ist, die für den Dienst reserviert ist, wobei der CTI-Server (CTI-Server 1, CTI-Server 2) dazu ausgebildet sind, den Ruf zwischen dem Benutzer und einer Nebenstelle zu dem Dienst mit Hilfe einer empfangenen B-Nummer ohne zusätzliche Kundenidentifizierung einzurichten.

2. Telekommunikationssystem nach Anspruch 1, **dadurch gekennzeichnet, dass** die Anzahl von B-Nummern gleich der Anzahl von gleichzeitig möglichen Anrufen zu dem Dienst ist.

3. Telekommunikationssystem nach Anspruch 1, **dadurch gekennzeichnet, dass** der CTI-Server (CTI-Server 1, CTI-Server 2) dazu ausgebildet ist, eine freie B-Nummer von der Serie von B-Nummern der PBX auszuwählen, wenn ein Ruf zu einem Dienst eingerichtet werden Soll.

4. Telekommunikationssystem nach Anspruch 1, **dadurch gen kennzeichnet, dass** die Spracherkennungsressourcen dazu ausgebildet sind, die B-Nummer zu detektieren,
wenn der Ruf empfangen wird, um die B-Nummer als Identifizierer bei der Kommunikation über eine CTI-Schnittstelle zu verwenden.

## Revendications

1. Système de télécommunication adapté afin d'assurer un service, qui permet de connecter un utilisateur d'un standard téléphonique privé, PBX, à une destination en prononçant son nom, dans lequel la destination peut être une extension interne ou être dans un réseau de télécommunication commuté public, PSTN, et dans lequel un serveur CTI (serveur CTI 1, serveur CTI 2) est installé de manière à commander le standard PBX et à établir un appel téléphonique entre l'utilisateur (A) et une extension souhaitée, ledit standard PBX étant agencé de manière à exécuter la commande d'appel, et des ressources de reconnaissance vocale et base de données de noms étant agencées, de manière centrale, afin d'assurer une utilisation simultanée par ledit standard PBX et éventuellement d'autres centraux téléphoniques du système, **caractérisé en ce qu'**une série d'extensions de chacun des numéros B de standard PBX, est réservée pour l'appel du service, chaque numéro B étant unique pour un standard PBX et une extension réservée du service, ledit serveur CTI (serveur CTI 1, serveur CTI 2) étant adapté de manière à mettre en oeuvre ledit appel entre l'utilisateur et une extension avec ledit service au moyen du numéro B reçu, sans identificateur de client supplémentaire.

2. Système de télécommunications selon la revendication 1, **caractérisé en ce que** le nombre de numéros B est égal au nombre d'appels simultanés possibles avec ledit service.

3. Système de télécommunications selon la revendication 1, **caractérisé en ce que** le serveur CTI (serveur CTI 1, serveur CTI 2) est adapté afin de sélectionner un numéro B libre à partir de la série de numéros B du standard PBX, lorsqu'un appel doit être mis en oeuvre avec un service.

4. Système de télécommunications selon la revendication 1, **caractérisé en ce que** lesdites ressources de reconnaissance vocale sont adaptées afin de détecter le numéro B lorsque l'appel est reçu de manière à utiliser le numéro B en tant qu'identificateur sur une communication sur une interface CTI,
